# EUROPÄISCHE PATENTANMELDUNG

(11) **EP 2 143 337 A1**
(43) Veröffentlichungstag der Anmeldung: **13.01.2010**
(21) Anmeldenummer: 08012373.0
(22) Anmeldetag: 09.07.2008
(51) Int. Cl.: A23J 1/12, B05D 5/08, C09D 4/00, C09D 175/04

(54) **Wachshaltige Lacke**

(71) Anmelder: Bayer MaterialScience AG, 51368 Leverkusen (DE)
(72) Erfinder: Köcher, Jürgen, Dr., 40764 Langenfeld (DE); Nennemann, Arno, Dr., 51469 Bergisch Gladbach (DE); Maleika, Robert, Dr., 40231 Düsseldorf (DE); Ridder, Frank, 51515 Kürten (DE); Eiden, Stefanie, Dr., 51371 Leverkusen (DE); Baur, Peter, Prof., Dr., 86938 Schondorf (DE); Bahnmüller, Stefan, Dr., 50672 Köln (DE); Hoheisel, Werner, Dr., 51061 Köln (DE); Voetz, Matthias, Dr, 51375 Leverkusen (DE); Rudhardt, Daniel, Dr., 50823 Köln (DE)

(57) **Zusammenfassung**

Die vorliegende Erfindung betrifft wachshaltige Lacke zur Herstellung selbstreinigender Oberflächenbeschichtungen.

## Beschreibung

Die vorliegende Erfindung betrifft wachshaltige Lacke zur Herstellung selbstreinigender Oberflächenbeschichtungen.

Gegenstände mit extrem schwer mit Wasser benetzbaren Oberflächen weisen eine Reihe von wirtschaftlich bedeutsamen Vorteilen auf, wobei die Fähigkeit zur Selbstreinigung von besonderem Interesse ist, da eine mechanische Entfernung von Schmutz dadurch weitestgehend entfallen kann.

Ein Ansatz ist es dazu, die Oberflächen mit hydrophoben Materialien wie Teflon^{®} zu beschichten, so dass Schmutz und Wasser kaum haften bleiben. Derartige Beschichtungen haben eine Reihe von Nachteilen. Zum einen kann mit dieser Methode bestenfalls ein Randwinkel von 120° erreicht werden. Des weiteren ist der Einsatz halogenierter Kohlenwasserstoffe aus umweltpolitischen Gründen vielfach nicht erwünscht. Lacke auf Basis permanent hydrophobierter Beschichtungen weisen zudem eine mangelnde Überlackierbarkeit auf.

Ein anderer Ansatz ist es, hydrophobe Nanopartikel wie hydrophobiertes Kaolin, Talkum, Ton oder Silicagel auf Oberflächen aufzubringen, wobei durch diese Partikel eine nanostrukturierte Oberfläche erhalten wird, welche wiederum den Effekt der Selbstreinigung oder zumindest der deutlich erleichterten mechanischen Reinigung bewirkt. Diese Technologie ist beispielsweise in CH-PS-268258 beschrieben. Nachteilig ist allerdings, dass die Nanopartikel durch mechanische Beanspruchung abgelöst werden können, so dass letztlich keine dauerhaft hydrophoben Eigenschaften der Oberflächen erreicht werden. Dadurch sinkt der Selbstreinigungseffekt im Laufe der Zeit ab.

EP-A 1 171 529 beschreibt Strukturen selbstorganisierender Wachse und beansprucht die Ausbildung selbiger durch Aufsprühen von hydrophoben Alkoholen, wie Nonakosan-10-ol, oder Alkandiolen, wie Nonakosan-5,10-diol. Nachteilig hieran ist die mangelhafte Stabilität solcher selbstreinigenden Oberflächen, da Detergentien oder zum Teil die mechanische Beanspruchung an sich bereits zur Ablösung der Strukturen führen. In den Ausführungsbeispielen wird neben einem Aufsprühen der Wachse auch die Sprühapplikation eines Lackes beschrieben, der Hentriacontan-14, 16-diol als Wachs umfasst. Wie experimentelle Nachstellungen gezeigt haben, werden jedoch durch diese Lack/Wachs-Kombination für selbstreinigende Wirkung erforderliche Randwinkel von 120° und mehr nicht erreicht

Eine ähnliche Anwendung beschreibt DE-A 10 2004 037812. Hier bilden sich durch Aufsprühen einer homogenen Polymerlösung, die aus einem Matrixpolymer, einer hydrophoben Komponente, einem Monomer und einem Initiator besteht, auf dem Substrat durch Selbstorganisation Mikrostrukturen in der Polymerschicht aus, die zu noppenartigen Ausbildungen führt. An dieser Lösung ist ebenfalls nachteilig, dass mechanische Beschädigung der Oberfläche zum Verlust der Selbstreinigungseigenschaften führt.

Aufgabe der vorliegenden Erfindung war es, Beschichtungsmittel bereitzustellen, welche zu hydrophoben Beschichtungen mit Randwinkeln von 120° und mehr führen und auf denen Wasser und Schmutz eine nur sehr geringe Tendenz zur Anhaftung zeigen und bei denen dieser Effekt eben nicht durch mechanische Beanspruchung beispielsweise beim Putzen nachlässt oder verschwindet.

Gelöst wurde diese Aufgabe nun durch ein Beschichtungssystem der nachfolgend beschriebenen Art.

Gegenstand der Erfindung sind Beschichtungsmittel, umfassend
A) mindestens eine filmbildende Komponente und
B) mindestens ein Getreide-Wachs

Als filmbildende Komponente können grundsätzlich alle dem Fachmann bekannten Harze und Bindemittel verwendet werden, welche zur Ausbildung von Filmen nach Applikation und Aushärtung bzw. Trocknung auf einer Oberfläche befähigt sind.

Bevorzugt sind dies beispielsweise Acrylharze, Alkydharze, Harnstoff-, Melamin- oder Phenolharze sowie wässrige, organische oder lösmittelfreie 1 oder 2K-Polyurethansysteme.

Besonders bevorzugte filmbildende Komponenten sind 1- oder 2-komponentige Polyurethansysteme.

Geeignete 1-komponentige Polyurethansysteme umfassen ein oder mehrere blockierte Polyisocyanate sowie ein oder mehrere Polyole oder Polyamine zur Vernetzung.

Ebenfalls geeignete 1-komponentige Systeme sind Lösungen von Polyurethanen oder Polyurethanharnstoffen sowie Dispersionen von Polyurethanen oder Polyurethanharnstoffen in Wasser, entweder in reinem Wasser oder gegebenenfalls mit Anteilen von wassermischbaren Lösungsmitteln wie N-Methylpyrrolidon.

Geeignete 2-komponentige Polyurethansysteme umfassen ein oder mehrere unblockierte Polyisocyanate sowie ein oder mehrere Polyole oder Polyamine zur Vernetzung.

Geeignete Polyisocyanate, die den eingesetzten Polyurethansystemen zugrunde liegen können sind beispielsweise aliphatische oder aromatische Di- oder Triisocyanate sowie deren höhermolekulare Folgeprodukte mit Uretdion- Isocyanurat-, Biuret- oder Allophanat-Strukturen.

Im Falle der blockierten Polyisocynate der 1-komponentigen Systeme sind die freien NCO-Gruppen mit Blockierungsmitteln gegebenenfalls unter Einsatz geeigneter Katalysatoren und Hilfs- und Zusatzstoffen reversibel blockiert. Geeignete Blockierungsmittel sind beispielsweise Butanonoxim, 3,5-Dimethylpyrrazol, Malonsäure, Diisopropylamin, ε-Caprolactam oder 1,2,4-Triazol. Die Methode zur Blockierung ist dem Fachmann gut bekannt und ist beispielsweise in Manfred Bock, Polyurethanes for Coatings, Vincentz Verlag 2001 beschrieben.

Geeignete Polyole, die den eingesetzten Polyurethansystemen zugrunde liegen können, sind beispielsweise Poyacrylatpolyole, Polyesterpolyole, Polyetherpolyole, Polycarbonatpolyole, Polycaprolactonpolyole sowie Polyurethanpolyole.

In einer bevorzugten Ausführungsform der Erfindung umfasst die filmbildende Komponente ein oder mehrere lineare oder gering verzweigte Polyurethanharnstoffe aufgebaut aus
a) Polyether-, Polyester- und/oder Polycarbonatpolyolen, mit zahlenmittleren Molekulargewichten von 600 und 4000 g/mol und OH-Funktionalitäten von 1,8 bis 2,2 ,
b) pro Mol an in a) eingesetzten Polyolen 0,3 bis 2,0 mol eines oder mehrerer aliphatischer oder cycloaliphatischer Diamine oder Hydrazin, und
c) pro Mol an in a) eingesetzten Polyolen 1,0 bis 3,0 mol eines oder mehrerer aliphatischer, cycloaliphatischer oder aromatischer Isocyanate.

Bevorzugt werden die erfindungswesentlichen Polyurethanharnstoffe als Lösung in einem einzelnen oder einer Mischung mehrerer organischer Lösemittel, bevorzugt in einem Gemisch zweier oder mehrerer Lösemittel eingesetzt.

Geeignete Lösemittel sind Toluol, Solventnaphta, Ester, Ketone, N-Methylacetamid, Dimethylformamid, N-Methylpyrrolidon, Alkohole wie Isopropanol oder 1-Methoxy-2-propanol oder Mischungen der vorgenannten Lösemittel.

Bevorzugt sind Gemische, die aromatische Kohlenwasserstoffe enthalten. Besonders bevorzugt sind Mischungen von Toluol mit Dimethylformamid

Bevorzugt enthalten solche Toluol/DMF-Mischungen mit Toluolanteilen von 10 bis 60 Gew.-%, besonders bevorzugt 15 bis 50 Gew.-%.

Der Feststoffgehalt dieser Lösungen beträgt typischerweise 10 bis 60 Gew.-%, bevorzugt 15 bis 40 Gew.-%.

Als Verbindungen der Komponente a) kommen bevorzugt Polyether, Polycarbonate oder deren Mischungen zum Einsatz.

Die OH-Funktionalität der Verbindungen der Komponente a) beträgt bevorzugt 1,9 bis 2,1.

Das zahlenmittlere Molekulargewicht der Verbindungen der Komponente a) beträgt bevorzugt 1000 bis 3000 g/mol.

Solche in Frage kommenden, Hydroxylgruppen aufweisenden Polyester der Komponente a) sind z. B. Umsetzungsprodukte von mehrwertigen, vorzugsweise zweiwertigen Alkoholen mit mehrwertigen, vorzugsweise zweiwertigen Carbonsäuren. Anstelle der freien Carbonsäuren können auch die entsprechenden Polycarbonsäureanhydride oder entsprechende Polycarbonsäureester von niedrigen Alkoholen oder deren Gemische zur Herstellung der Polyester verwendet werden.

Die Polycarbonsäuren können aliphatischer, cycloaliphatischer, aromatischer und/oder heterocyclischer Natur sein und gegebenenfalls, z. B. durch Halogenatome, substituiert sein und/oder ungesättigt sein.

Beispielsweise geeignet sind Bernsteinsäure, Adipinsäure, Sebacinsäure, Phthalsäure, Isophtalsäure, Trimellitsäure, Phthalsäureanhydrid, Tetrahydrophthalsäureanhydrid, Hexahydrophthalsäureanhydrid, Tetrachlorphthalsäureanhydrid, Glutarsäureanhydrid, Maleinsäure, Maleinsäureanhydrid, Fumarsäure oder Terephthalsäuredimethylester.

Als mehrwertige Alkohole kommen z. B. Ethylenglykol, Propylenglykol-1,2, Propylenglykol-1,3, Butylenglykol-1,4, Butylenglykol-2,3, Hexandiol-1,6, Octandiol-1,8, Neopentylglykol oder 2-Methyl-1,3-propandiol in Frage. Auch Polyester aus Lactonen, z. B. ε-Caprolacton, sind einsetzbar.

Die in Frage kommenden, Hydroxylgruppen aufweisenden Polyether sind solche, die durch Polymerisation von cyclischen Ethern wie Ethylenoxid, Propylenoxid, Butylenoxid, Tetrahydrofuran, Styroloxid oder Epichlorhydrin mit sich selbst, z. B. in Gegenwart von BF₃, oder durch Anlagerung dieser Ringverbindungen, gegebenenfalls im Gemisch oder nacheinander, an Startkomponenten mit reaktionsfähigen Wasserstoffatomen wie Alkoholen und Aminen, z. B. Wasser, Ethylenglykol, Propylenglykol-1,2 oder Propylenglykol-1,3, hergestellt werden.

Als Hydroxylgruppen aufweisende Polycarbonate kommen solche in Betracht, die z. B. durch Umsetzung von Diolen wie Propandiol-1,3, Butandiol-1,4, Hexandiol-1,6 oder Di-, Tri- oder Tetraethylenglykol mit Diaryl- oder Dialkylcarbonaten oder mit Phosgen hergestellt werden können.

Bevorzugt sind solche Polycarbonate auf Basis von Hexandiol-1,6, sowie modifizierend wirkenden Co-diolen wie z. B. Butandiol-1,4 oder auch ε-Caprolacton.

Die Herstellung der erfindungswesentlichen Polyharnstoffe erfolgt unter Einsatz sogenannter Kettenverlängerer b), wie beispielsweise Hydrazin oder aliphatischen Diaminen, wie Ethylendiamin, Propylendiamin, Hexamethylendiamin-1,6 oder anderen aliphatischen Diaminen. Ferner können in b) auch cycloaliphatische Diamine wie 1,4-Bis(aminomethyl)cyclohexan, 4,4'-Diamino-3,3'dimethyldicyclohexylmethan und andere (C₁ - C₄)-Di- und Tetraalkyldicyclo-hexylmethane wie 4,4'-Diamino-3,5-diethyl-3',5'-diisopropyldicyclohexylmethan eingesetzt werden. Bevorzugt werden in b) 1-Amino-3,3,5-trimethyl-5-aminomethylcyclohexan (Isophorondiamin) oder 4,4'-Diaminodicyclohexylmethan sowie deren Mischungen eingesetzt.

Bevorzugt werden pro Mol Polyol der Komponente a) 0,6 bis 1,7 mol an Kettenverlängerer eingesetzt.

Üblicherweise verwendet man etwa äquivalente Mengen an Kettenverlängerern, bezogen auf freie Isocyanatgruppen der Verbindungen der Komponente c) abzüglich der NCO-Gruppen, die durch Umsetzung mit OH-Gruppen der Verbindungen der Komponente a) verbraucht werden. Bevorzugt wird jedoch weniger als die äquivalente Menge eingesetzt, besonders bevorzugt werden nur 30 bis 80 mol% der nach Umsetzung mit den OH-Gruppen der Verbindungen der Komponente a) noch freien NCO-Gruppen mit einem Kettenverlängerer umgesetzt.

Die nach der Umsetzung mit dem Kettenverlängerer b) noch freien NCO-Gruppen können mit monofunktionellen Abrechern wie Butylamin, Stearylamin, Trialkoxylsilylpropanamin oder Morpholin umgesetzt werden. Dies verhindert ein zu großes Anwachsen des Molekulargewichtes beziehungsweise von Vernetzungs- und Verzweigungsreaktionen. Auch im Lösungsmittelgemisch enthaltenden Alkohole können in dieser Form als Kettenverlängerer fungieren.

Als Diisocyanate c) kommen alle dem Fachmann bekannten aliphatischen, cycloaliphatischen und/oder aromatischen Isocyanate einer mittleren NCO-Funktionalität ≥ 1, bevorzugt ≥ 2 einzeln oder in beliebigen Mischungen untereinander eingesetzt werden, wobei es unerheblich ist, ob diese nach Phosgen- oder phosgen-freien Verfahren hergestellt wurden.

Bevorzugt sind aliphatische oder cycloaliphatische Isocyanate, wobei diese bevorzugt (ohne die enthaltenen NCO-Gruppen) von 3 bis 30, bevorzugt 4 bis 20 Kohlenstoffatome aufweisen.

Besonders bevorzugte Verbindungen der Komponente c) entsprechen der vorstehend genannten Art mit aliphatisch und/oder cycloaliphatisch gebundene NCO-Gruppen wie beispielsweise Bis-(isocyanatoalkyl)ether, Bis- und Tris-(isocyanatoalkyl)-benzole, -toluole, sowie -xylole, Propandiisocyanate, Butandiisocyanate, Pentandiisocyanate, Hexandiisocyanate (z.B. Hexamethylendiisocyanat, HDI), Heptandiisocyanate, Octandiisocyanate, Nonandiisocyanate (z.B. Trimethyl-HDI (TMDI) in der Regel als Gemisch der 2,4,4- und 2,2,4-Isomeren), Nonantriisocyanate (z.B. 4-Isocyanatomethyl-1,8-octandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI) oder Bis-(isocyanatomethyl)norbornan (NBDI).

Ganz besonders bevorzugte Verbindungen der Komponente c) sind Hexamethylendiisocyanat (HDI), Trimethyl-HDI (TMDI), 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norbornan (NBDI), 3(4)-Isocyanatomethyl-1-methyl-cyclohexylisocyanat (IMCI) und/oder 4,4'-Bis(isocyanatocyclohexyl)methan (H₁₂MDI) oder Gemische dieser Isocyanate.

Bevorzugt werden pro Mol an in a) eingesetzten Polyolen 1,5 bis 2,8 mol an Isocyanaten der Komponente c) eingesetzt.

Zur Herstellung der erfindungsgemäßen Polyurethanharnstoff-Beschichtungen werden Polyole a) sowie Isocyanate c) in der Schmelze oder in Lösung miteinander umgesetzt, bis der theoretische NCO-Gehalt entsprechend einer vollständigen Umsetzung von OH-Gruppen mit freien NCO-Gruppen erreicht ist. Die Reaktion kann unkatalysiert oder unter Zuhilfenahme eines Katalysators wie beispielsweise zinnhaltigen Katalysatoren wie Dibutylzinnlaurat verlaufen. Bevorzugt ist die katalysierte Reaktion. Dann wird Lösemittel zugesetzt und die gegebenenfalls gelösten Kettenverlängerungsdiamine der Komponente b) zugesetzt. Nach Erreichen eines gewichtsmittleren Molekulargewichtes M_{w} im Bereich von 25000 bis 500000 g/mol werden die noch verbleibenden freien NCO-Gruppen mit monofunktionellen aliphatischen Aminen umgesetzt zum NCO-gruppenfreien Produkt umgesetzt.

Die erfindungswesentlichen Getreidewachse der Komponente B) sind durch organische Extraktion aus Getreide, bevorzugt Gerste- oder Weizen erhältlich. Dazu wird die Pflanze ohne Wurzel mit bevorzugt halogenierten Kohlenwasserstoffen, besonders bevorzugt Chloroform behandelt und das Extrakt nach Abtrennung vom Lösemittel befreit. Der Rückstand wird mit Alkoholen, bevorzugt Methanol gewaschen und getrocknet.

Getreidewachse der Komponente B) umfassen typischerweise ein oder mehrere Verbindungen der Gruppe langkettige primäre Alkohole CH₃(CH₂)ₓCH₂OH, sekundäre Alkohole CH₃(CH₂)ₓCHOH(CH₂)yCH₃, n-Alkane CH₃(CH₂)ₓCH₃, Ketone CH₃(CH₂)ₓCO(CH₂)_{y}CH₃, β-Diketone CH₃(CH₂)ₓCOCH₂CO(CH₂)_{y}CH_{3.} Carbonsäuren CH₃(CH₂)ₓCOOH, Ester CH₃(CH₂)ₓCOO(CH₂)_{y}CH₃ und Aldehyde CH₃(CH₂)ₓCHO, wobei x ganzahlige Werte von 5 bis 20 sowie y ganzzahlige Werte von 1 bis 30 annehmen können.

Bevorzugte Getreidewachse sind solche, die 40 bis 70 Gew.-% primäre Alkohole, 10 bis 20 Gew.-% Ester, 0 bis 15 Gew.-% Aldehyde, 0 bis 15 Gew.-% β-Diketone, 5 bis 20 Gew.-% Kohlenwasserstoffe und 0 bis 30 Gew.-% Hydroxy-β-Diketone enthalten. Ein bevorzugter primärer Alkohol ist Hexacosanol.

Bevorzugt beträgt der Anteil an primären Alkoholen, bevorzugt Hexacosanol, bezogen auf das gesamte Wachs mindestens 40 Gew.-%, besonders bevorzugt mindestens 70 Gew.-%.

Die erfindungswesentlichen Wachse werden bevorzugt als Wachsdispersion eingesetzt. Zu deren Herstellung werden die betreffenden Wachse mit Tensiden und dem gewünschten Dispergiermedium gemischt und dabei erwärmt.

Zur Durchmischung und Dispergierung kommen bevorzugt Magnetrührer, Ultraschallfinger, Strahldispergator, Mikrofluidiser oder auch Kombinationen derartiger Misch und Dispergieraggregate zum Einsatz.

Die Temperatur wird bevorzugt so gewählt, dass der Schmelzpunkt bzw. der Schmelzbereich des Wachses erreicht wird.

Als Lösemittel zur Herstellung der Wachsdispersion sowie zur Einarbeitung des Getreidewachses B in die Polyurethanharnstofflösung A sind beispielsweise geeignet Ester, wie Ethylacetat, Butylacetat, Methoxypropylacetat, Methylglykolacetat, Ethylglykolacetat, Diethylenglykolmonomethyletheracetat; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische.

Bevorzugte Tenside zur Stabilisierung der Wachspartikel in der Dispersion sind Blockcopolymere, bevorzugt Diblockcopolymere. Diese genügen bevorzugt der Summenformel RO-(CH₂-CH₂-O)ₓ-H, wobei x bevorzugt 3 bis 10 und R bevorzugt CH₃(CH₂)ₙ- ist. Diese Blockcopolymere sind beispielsweise unter dem Handelsnamen Lutensole der BASF SE, Ludwigshafen, DE erhältlich.

Die Teilchengröße der Wachspartikel in diesen Dispersionen wird mit Hilfe der dynamischen Lichtstreuung bestimmt, wie in T. Allen, Particle Size Measurements, Bd. 1., Kluver Academic Publishers, 1999 beschrieben ist.

Die mittlere Partikelgröße der erfindungswesenlichen Wachsdspersionen beträgt bevorzugt weniger als 5 µm, bevorzugt weniger als 1 µm, besonders bevorzugt 100 bis 300 nm.

Solche Dispersionen haben bevorzugt einen Festkörper bezogen auf die darin dispergierten Wachse von 1 bis 30 Gew.-%, besonders bevorzugt 8 bis 12 Gew.-%.

Über die Komponenten A) und B) hinaus können die erfindungsgemäßen Beschichtungsmittel Hilfs- und Zusatzstoffe enthalten wie oberflächenaktive Substanzen, interne Trennmittel, Füllstoffe, Farbstoffe, Pigmente, Flammschutzmittel, Hydrolyseschutzmittel, Mikrobiozide, Verlaufshilfsmittel, Lösemittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin^{®} 292 und Tinuvin^{®} 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.

Die genannten Beschichtungsmittel können mit den an sich bekannten Techniken wie Sprühen, Tauchen, Fluten, Rollen, Streichen oder Gießen auf Oberflächen appliziert werden. Nach dem Ablüften gegebenenfalls vorhandener Lösungsmittel, härten die Beschichtungen dann bei Umgebungsbedingungen oder auch bei höheren Temperaturen von beispielsweise 40 bis 200 °C.

Die genannten Beschichtungsmittel können beispielsweise auf Metalle, Kunststoffe, Keramik, Glas sowie Naturstoffe aufgebracht werden, wobei die genannten Substrate zuvor einer gegebenenfalls notwendigen Vorbehandlung unterzogen worden sein können.

Die so erhaltenen erfindungsgemäßen Lacke eignen sich für praktisch alle Einsatzgebiete, in denen heute lösemittelhaltige, lösemittelfreie oder andersartige wässrige Anstrich- und Lacksysteme mit einem erhöhten Eigenschaftsprofil Verwendung finden, z.B.: Beschichtung praktisch aller mineralischer Baustoff-Oberflächen wie Kalk- und/oder Zement gebundene Putze, Gips enthaltende Oberflächen, Faser-Zement-Baustoffe, Beton; Lackierung und Versiegelung von Holz und Holzwerkstoffen wie Spanplatten, Holzfaserplatten, Papier und textile Untergründe; Lackierung metallischer Oberflächen; Lackierung asphalt- oder bitumenhaltiger Straßenbeläge; Lackierung und Versiegelung diverser Kunststoffoberflächen.

Die aus den erfindungsgemäßen Beschichtungsmitteln erhältlichen Beschichtungen, die ebenfalls ein Gegenstand der vorliegenden Erfindung sind, zeichnen sich durch eine ausgesprochen hohe Hydrophobie aus. Die Randwinkel dieser Beschichtungen betragen bevorzugt mindestens 100°, besonders bevorzugt mindestens 120° und ganz besonders mindestens 140°.

Die Randwinkelmessung erfolgt mittels des Video- Randwinkelmessgerätes OCA20 der Firma Dataphysics. Dazu wird mit rechnergesteuerten Spritzen jeweils 10 Probentropfen (statisch) auf das Substrat aufgesetzt und deren Benetzungsrandwinkel gemessen. Die Probentropfen bestehen aus Millipore Wasser und haben ein Volumen von 10 Microlitern. Zuvor wurde mittels eines Antistatikföns die statische Aufladung (falls vorhanden) entfernt.

Die erfindungswesentlichen Randwinkel der Beschichtungen können sich sofort unmittelbar nach Applikation und Aushärtung der Beschichtungsmittel einstellen. Es ist jedoch aus möglich, dass diese Oberflächeneigenschaft erst zeitlich verzögert ausgebildet wird. Bevorzugt dauert es bis zum Erreichen der erfindungsgemäßen Randwinkel ab Beendigung des Aushärtungsvorgangs durch Trocknung oder Vernetzung nicht mehr als 10 Tage, besonders bevorzugt nicht mehr als 5 Tage.

### Beispiele

Die Ermittlung des NCO-Gehaltes der in den Beispielen und Vergleichsbeispielen beschriebenen Harze erfolgte durch Titration gemäß DIN EN ISO 11909.

Die Bestimmung der Festkörpergehalte erfolgte nach DIN-EN ISO 3251. Es wurden 1 g Polyurethandispersion bei 115 °C bis zur Gewichtskonstanz (15-20 min) mittels eines Infrarottrockners getrocknet.

Die Messung der mittleren Teilchengrößen der Polyurethandispersionen erfolgt mit Hilfe des High Performance Particle Sizer (HPPS 3.3) der Firma Malvern Instruments.

Die in % angegebenen Mengenangaben verstehen sich, wenn nicht anders vermerkt, als Gew.-% und beziehen sich auf die erhaltene Gesamtlösung.

Viskositätsmessungen wurden mit dem Physics MCR 51 Rheometer der Firma Anton Paar GmbH, Ostfildern, Deutschland, durchgeführt

Mittels des Video- Randwinkelmessgerätes OCA20 der Firma Dataphysics mit rechnergesteuerten Spritzen wurden auf das Substrat jeweils 10 Probentropfen (statisch) aufgesetzt und deren Benetzungsrandwinkel gemessen. Zuvor wurde mittels eines Antistatikföns die statische Aufladung (falls vorhanden) entfernt.

Mittels Konfokalem Mikroskop Leica TCS NT mit folgenden Lasern (Ar - Laser 458, 488, 514 nm, He-Ne-Laser 632.8 nm, UV (Ar-Laser) 354/364 nm wird die Größe der Wachsdepottröpfchen bestimmt.

Zur Bestimmung des Depotdefekts bezogen auf das eingelagerte Wachs wurde der Stickstoffgehalt der Beschichtungsoberfläche mittels ESCA - Electron Spectroscopy for Chemical Analysis - bestimmt. Dazu wurde ein Escalab 220 i-XL der Firma: Thermo VG Scientific benutzt. Die Informationstiefe der Methode liegt dabei im Bereich bis zu 10 nm.

### Beispiel 1:

Dieses Beispiel beschreibt die Herstellung eines erfindungsgemäßen Polyurethanharnstoffes in Lösung.

219 g eines Polycarbonatdiols mit einem mittleren Molgewicht von 2000 und einer OH-Zahl von 56 mg KOH/g hergestellt aus Dimethylcarbonat und Hexandiol-1,6, wurden mit 241 g Toluol und 47,8 g Bis-(4-isocyanatocyclohexyl)methan (H₁₂MDI) vermischt. Nach 5 min Rühren der Mischung wurden 20 mg Dibutylzinndilaurat bei 60 °C zugegeben und bei dieser Temperatur bis zu einem konstanten NCO-Gehalt von 1,2 % umgesetzt. Man verdünnte die Reaktionsmischung mit 363 g Dimethylformamid und ließ die Mischung auf Raumtemperatur abkühlen. Bei dieser Temperatur wurden eine Lösung von 9,9 g Isophorondiamin in 13,8 g Dimethylformamid und 9,2 g Toluol gelöst zugegeben. Nach beendetem Aufbau des Molgewichtes und Erreichen des gewünschten Viskositätsbereiches wurden zur Blockierung des verbleibenden Rest-NCO-Gehaltes 1,5 g n-Butylamin zugegeben. Man erhielt 905 g einer 31,4%igen Polyurethanharnstofflösung in Dimethylformamid und Toluol mit einer Viskosität von 50100 mPas bei 22 °C.

### Beispiel 2:

Dieses Beispiel beschreibt die Herstellung eines erfindungsgemäßen Polyurethanharnstoffes in Lösung.

219 g eines Polycarbonatdiols mit einem mittleren Molgewicht von 2000 und einer OH-Zahl von 56 mg KOH/g hergestellt hergestellt aus Dimethylcarbonat und Hexandiol-1,6, wurden mit 241 g Dimethylformamid und 30,7 g Hexamethylendiisocyanat vermischt. Man erwärmt auf 100 °C und setzte bei dieser Temperatur bis zu einem konstanten NCO-Gehalt von 1,1 um. Man verdünnte die Reaktionsmischung mit 122 g Dimethylformamid und 241 g Toluol und ließ die Mischung auf Raumtemperatur abkühlen. Bei dieser Temperatur wurden eine Lösung von 10,8 g Isophorondiamin in 15,1 g Dimethylformamid und 10,1 g Toluol gelöst zugegeben. Nach beendetem Aufbau des Molgewichtes und Erreichen des gewünschten Viskositätsbereiches wurden zur Blockierung des verbleibenden Rest-NCO-Gehaltes 0,5 g n-Butylamin zugegeben. Man erhielt 890 g einer 29,4%igen Polyurethanharnstofflösung in Dimethylformamid und Toluol mit einer Viskosität von 9000 mPas bei 22 °C.

### Beispiel 3:

0,1 g Weizenwachs wurden in 5 g Toluol bis über den Siedepunkt des Wachses erwärmt, zweimal mit einem Ultraschallfinger behandelt und anschließend unter Rühren abgekühlt. 1 g des Weizenwachs/Toluol-Gemisches wurden in 9 g der Lösung aus Beispiel 1, die mit Toluol 1:1 (Vol/Vol) verdünnt wurde, eingerührt.

Die Mischung wurde aufgerakelt, 120 min bei RT vorgetrocknet und bei 85°C 1h ausgehärtet. Anschließend wurde der Randwinkel gemessen, um die Güte der Selbstreinigung zu beurteilen. Der Randwinkel direkt nach dem Härten betrug 140°. Die Partikelgröße des Wachses im Lack wurde mit Hilfe des konfokalen Mikroskopes bestimmt. Sie beträgt 1-2 µm.

### Beispiel 4:

0,1 g Weizenwachs wurden in 5 g Toluol bis über den Siedepunkt des Wachses erwärmt, zweimal mit einem Ultraschallfinger behandelt und anschließend unter Rühren abgekühlt. 1 g des Weizenwachs/Toluol-Gemisches wurden in 9 g der Lösung aus Beispiel 2, die mit Toluol 1:1 (Vol/Vol) verdünnt wurde eingerührt.

Die Mischung wurde aufgerakelt, 30 min bei RT vorgetrocknet und bei 85°C 1h ausgehärtet. Anschließend wurde der Randwinkel gemessen, um die Güte der Selbstreinigung zu beurteilen. Der Randwinkel direkt nach dem Härten beträgt 97°, nach 6 Tagen Lagerung bei 25° C 138°. Die Partikelgröße des Wachses im Lack wurde mit Hilfe des konfokalen Mikroskopes bestimmt. Sie beträgt 1-2 µm.

### Beispiel 5:

### Bestimmung des Depot-Effektes

Die Oberflächenzusammensetzung der Beschichtung aus Beispiel 4 wurde mit ESCA untersucht. Dabei wurde zunächst ein Stickstoffgehalt von unter 0,4 % gefunden, was daraufhin deutet, dass die Lackschicht von einer Wachsschicht überzogen war. Anschließend wurde die Oberfläche der Beschichtung mittels Argon-Ionen (1 keV, 1 uA) abgesputtert und somit von Wachs an der Oberfläche befreit. Dann wurde Oberflächenzusammensetzung nochmals mittels ESCA bestimmt. Der Stickstoffwert stieg auf 6,7 %, wobei er nach 6 Tagen Lagerung bei Raumtemperatur auf 0,4 % abgesunken war. Das bedeutet, dass Wachs nachdiffundiert und den Lack mit einer dünnen Schicht überzieht.

## Patentansprüche

1. Beschichtungsmittel, umfassend
A) mindestens eine filmbildende Komponente und
B) mindestens ein Getreide-Wachs.

2. Beschichtungsmittel gemäß Anspruch 1, **dadurch gekennzeichnet, dass** in A) in der filmbildenden Komponente Verbindungen ausgewählt aus der Gruppe bestehend aus Acrylharze, Alkydharze, Harnstoffharze, Melaminharze, Phenolharze, wässrige, organische oder lösmittelfreie 1 K- oder 2K-Polyurethansysteme eingesetzt werden.

3. Beschichtungsmittel gemäß Anspruch 2, **dadurch gekennzeichnet, dass** in A) 1- oder 2-komponentige Polyurethansysteme eingesetzt werden.

4. Beschichtungsmittel gemäß Anspruch 2 oder 3, **dadurch gekennzeichnet, dass** in A) als filmbildende Komponente ein oder mehrere lineare oder gering verzweigte Polyurethanharnstoffe aufgebaut aus
a) Polyether-, Polyester- und/oder Polycarbonatpolyolen, mit zahlenmittleren Molekulargewichten von 600 und 4000 g/mol und OH-Funktionalitäten von 1,8 bis 2,2 ,
b) pro Mol an in a) eingesetzten Polyolen 0,3 bis 2,0 mol eines oder mehrerer aliphatischer oder cycloaliphatischer Diamine oder Hydrazin, und
c) pro Mol an in a) eingesetzten Polyolen 1,0 bis 3,0 mol eines oder mehrerer aliphatischer, cycloaliphatischer oder aromatischer Isocyanate
eingesetzt werden.

5. Beschichtungsmittel gemäß Anspruch 4, **dadurch gekennzeichnet, dass** die Polyurethanharnstoffe als Lösung in einem oder mehreren organischen Lösemitteln eingesetzt werden.

6. Beschichtungsmittel gemäß einem der Ansprüche 1 bis 5, **dadurch gekennzeichnet, dass** die Getreidewachse durch organische Extraktion aus Getreide erhältlich sind und 40 bis 70 Gew.-% primäre Alkohole, 10 bis 20 Gew.-% Ester, 0 bis 15 Gew.-% Aldehyde, 0 bis 15 Gew.-% β-Diketone, 5 bis 20 Gew.-% Kohlenwasserstoffe und 0 bis 30 Gew.-% Hydroxy-ß-Diketone enthalten.

7. Beschichtungsmittel gemäß einem der Ansprüche 1 bis 6, **dadurch gekennzeichnet, dass** die Getreidewachse einen Anteil an Hexacosanol von mindestens 70 Gew.-% bezogen auf das gesamte Wachs aufweisen.

8. Beschichtungsmittel gemäß einem der Ansprüche 1 bis 7, **dadurch gekennzeichnet, dass** die Getreidewache als Dispersion in organischem Lösemittel eingesetzt werden.

9. Beschichtungsmittel gemäß Anspruch 8, **dadurch gekennzeichnet, dass** die Dispersionen über Blockcopolymere stabilisiert sind.

10. Beschichtungen erhältlich aus Beschichtungsmitteln gemäß einem der Ansprüche 1 bis 9.

11. Substrate beschichtet mit Beschichtungen gemäß Anspruch 10.

12. Dispersionen von Getreidewachsen in organischen Lösemitteln.

13. Dispersionen gemäß Anspruch 12, **dadurch gekennzeichnet, dass** das darin dispergiert vorliegende Wachs einen Anteil an Hexacosanol von mindestens 70 Gew.-% bezogen auf das gesamte Wachs aufweist.

14. Dispersionen gemäß Anspruch 12 oder 13, **dadurch gekennzeichnet, dass** das darin dispergiert vorliegende Wachs eine Partikelgröße von 100 bis 300 nm aufweist.

15. Dispersionen gemäß einem der Ansprüche 12 bis 14, **dadurch gekennzeichnet, dass** diese durch Blockcopolymere stabilisiert sind.
